# EUROPEAN PATENT SPECIFICATION

(11) **EP 1 859 839 B1**
(45) Date of publication and mention of the grant of the patent: **17.12.2008**
(21) Application number: 06114347.5
(22) Date of filing: 22.05.2006
(51) Int. Cl.: A63B 53/10, B29C 70/44, A63B 53/12, B29C 70/46

(54) **Golf shaft having a single main tube**
Golfschlägerschaft mit einem einzelnen Hauptrohr
Manche de club de golf avec un seul tube principal

(43) Date of publication of application: 28.11.2007
(73) Proprietor: Prince Sports, Inc., Bordentown NJ 08505 (US)
(72) Inventor: Davis, Stephen J., Newtown, 18940 (US); Gazzara, Roberto, 30171, Mestre (VE) (IT); Pinaffo, Mauro, 35012, Camposampiero (PD) (IT); Pezzato, Mauro, 31100, Treviso (IT); Pozzobon, Michele, 31050, Fossalonga di Vedelago (TV) (IT)
(74) Representative: Zanoli, Enrico

(56) References cited:
- WO-A2-03/076176
- WO-A2-20/04075996
- JP-A- 53 038 431
- US-A- 2 321 773
- US-A- 4 795 153
- US-A- 5 082 279
- US-A1- 2003 104 152
- US-A1- 2004 048 683

## Description

### BACKGROUND OF THE INVENTION

The present invention relates to a golf shaft made preferably of composite material.

The performance of a golf shaft is determined by a number of factors such as weight, bending flex, bending flex distribution, torsional stiffness, strength, and shock absorption. The traditional golf shaft is a single tubular structure with a tapered circular cross section and a hollow interior. The wall thickness can vary along its length to provide specific performance needs. The golf shaft may be made from a number of materials such as aluminum, steel, titanium, and light weight composite materials.

The weight of a golf shaft is a critical feature in determining performance. The lighter the shaft weight, the easier it is to swing the golf club resulting in higher head velocities. Therefore, the lightest materials and designs are used to achieve these performance goals. The most popular high performance material for modern golf shaft design is carbon fiber reinforced epoxy resin (CFE) because it has the highest strength and stiffness to weight ratio of any realistically affordable material. As a result, CFE can produce a very light weight golf shaft with excellent strength as well as providing a variety of stiffnesses.

The stiffness and stiffness distribution of a golf shaft are also important factors in determining the performance of a golf shaft. The bending stiffness of the golf shaft in the plane of the swing needs to match the forces created by the acceleration imposed by the golfer's swing in order to have the proper recovery to deliver the golf club head at the proper timing.

The bending stiffness of the golf shaft out of plane, i.e. perpendicular to the direction of travel of the golf club head is also important in determining the vertical position and orientation of the golf club head at the impact zone. Finally, the torsional stiffness of the golf shaft is important in determining the degree of rotation of the golf club head as a result of off center hits.

Carbon fiber composites offer very high stiffness to weight ratios, and because of their anisotropic properties offered, can be tailored to provide different stiffnesses in different directions and locations along the length of the golf shaft. However, there are limitations based on the traditional design of the single tube golf shaft.

There are further limitations on carbon fiber based materials used for golf shaft structures when considering strength requirements. A golf shaft made from carbon fiber composite can be susceptible to catastrophic failure resulting from excessive compressive forces which cause buckling of the thin walled tubes. A golf shaft is subjected to a multitude of stress conditions. There are bending loads in a multitude of directions. There are torsional loads induced by off center hits. There are impact loads and vibrational loads.

Furthermore, there are high stress concentrations where the shaft connects to the golf club head. This is a common failure location due to the high stress concentration imposed by the rigid golf club head attached to the flexible shaft. For this reason, the wall thickness of the shaft is the greatest in this area. As a result, the shaft can be heavier than desired. In addition, the effect of this extra mass on the swing weight of the club is greater than any other location on the shaft, since it is the furthest from the point of rotation of the swing.

Another desirable feature in a golf shaft is comfort. Striking the golf ball off the center region or "sweet spot" of the golf club head can be a painful experience due to the resulting torque and vibrations transmitted to the hands. Furthermore, striking the golf club head on the hard ground can produce uncomfortable shock waves to the hands and arms. Included is a shock wave that travels directly up the axis of the shaft. All types of shock and vibration are magnified with shafts of a lighter weight, which don't have the sufficient mass or inertia to absorb the shock or damp the vibrations.

The evolution of the modern golf shaft over the past twenty years has focused on improving light weight, stiffness, torsional stiffness, strength, and comfort. However, there has not been a golf shaft that has all of the mentioned performance benefits.

A lighter weight shaft is easier to swing, and there have been numerous golf shaft designs which have achieved lighter weight such as U.S. Pat. No. 5,695,408 to DeLaCruz et. al., which describes a golf shaft with a larger diameter grip portion end to reduce the weight of the grip and therefore reduce the overall weight of the golf club.

Increasing the torsional stiffness of a golf shaft is desirable because off center hits rebound with a smaller dispersion angle. U.S. Pat. No. 6,692,377 to Galloway describes a metal foil spiral wrapped along the length of the shaft to reduce torsional deflections. The metal foil, being a higher density than the carbon fiber/epoxy, would increase the weight of the shaft. Other companies have improved torsional stiffness by using higher modulus materials, or simply increasing the diameter of the shaft. Both of these options result in a shaft with less desirable bending stiffness.

Strength of the shaft is also important in high stress areas such as regions of high bending deflections or where the shaft connects to the golf club head. One method to increase strength is to build up the wall thickness of the shaft. Another method as described in U.S. Pat. No. 6,860,821 to Unosawa and Someno is to use a high strength metal wire layer within the composite laminate to increase strength. The metal wire, being a higher density, would increase the weight of the shaft.

Comfort is another important characteristic of a golf shaft. The ability of a golf shaft to absorb shock and damp vibrations is a desirable feature. Replacing the traditional epoxy thermoset resin used in carbon fiber reinforced composite materials with a viscoelastic thermoplastic resin, as shown in U.S. Pat. No. 6,261,500 to Park, et al., produces a shaft with improved vibration damping. However, thermoplastic based composites have lower compression strength than thermoset based composites, and are susceptible to moisture absorption which reduces strength.

JP 53 038 431 A to Hiromitsu discloses a golf club with a valve assembly mounted in the shaft for selectively preventing or allowing the flow of liquid or powder between upper and lower sections of the golf club.

There are no designs using holes for performance benefits. This is primarily because cutting holes weakens the structure considerably because reinforcing fibers are severed when producing the holes. One previous design uses holes in the grip end of the shaft to provide gripping means as shown in U.S. Pat. No. 5,897,440 to Bae, et. al. Each hole is drilled which weakens the structure. Into each hole is placed an elastomeric insert with an external portion to provide a gripping means in a light weight design.

There exists a continuing need for an improved golf shaft that has the combined features of light weight, improved bending stiffness, improved torsional stiffness, improved strength, and improved comfort.

### SUMMARY OF THE INVENTION

The present invention is a golf club shaft where the shaft is formed of a single, hollow tube having at least one, and preferably a series, of "ports" that extend through the hollow tube. The ports provide specific performance advantages. Each port has a peripheral wall that extends between opposed holes in the hollow tube. The opposite ends of each port are bonded to the walls of the shaft tube. The wall forming the port, which extends between opposite sides of the shaft tube, preferably is shaped to act as opposing arches which provide additional strength, stiffness, comfort, and aesthetic benefits.

The present invention applies preferably to composite golf shafts, but will apply to tubular golf shafts of all materials. For the composite golf shaft, the holes to accommodate the ports may be formed in the primary prepreg tube prior to molding by punching or other suitable means. Although carbon fibers may be cut in the process, the primary tube retains strength due to the fact that, after molding, the tubular insert members (ports) are bonded to the hole edges and extend across the primary tube. Alternatively, the holes may be formed by separating fibers in the prepreg wall, in which case fibers will not be cut.

The present invention is designed to provide a combination of light weight, tailored stiffness, greater strength, greater comfort, and improved aesthetics over the current prior art.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of descriptions and should not be regarded as limiting.

The present invention provides a new and improved golf shaft which may be easily and efficiently manufactured.

The present invention provides a new and improved golf shaft which is of durable and reliable construction.

The present invention provides a new and improved golf shaft which may be manufactured at low cost with regard to both materials and labor

The present invention provides a golf shaft that can provide specific stiffness zones at various orientations and locations along the length of the shaft.

The present invention provides a golf shaft that improves the torsional stiffness of the shaft.

The present invention provides an improved golf shaft that has superior strength and fatigue resistance.

The present invention provides an improved golf shaft that has improved shock absorption and vibration damping characteristics.

The present invention provides an improved golf shaft that has a unique look and improved aesthetics.

For a better understanding of the invention and its advantages, reference should be made to the accompanying drawings and descriptive matter in which there are illustrated preferred embodiments of the invention.

### BRIEF DESCRIPTION OF THE DRAWINGS

Figure 1 is an isometric view of a golf shaft constructed in accordance with an embodiment of the present invention.
Figure 2 is a front view of a portion of a prepreg tube during formation of the shaft shown in Fig. 1.
Figure 3 is a front view of a portion of the prepreg tube of Figure 3 during a subsequent step in forming the shaft.
Figure 4 is a cross-sectional view of the prepreg tube of Figure 3, taken through lines 4-4.
Figure 5 is a side view of the prepreg tube of the prepreg tube of Figure 3 during a subsequent step in forming the shaft.
Figure 6 is an isometric view of a portion of the shaft after molding.
Figure 7 is a longitudinal sectional view, taken through lines 7-7 of Figure 6.
Figures 8a and 8b illustrate an alternative production method.

The same reference numerals refer to the same parts throughout the various Figures.

### DETAILED DESCRIPTION OF THE INVENTION

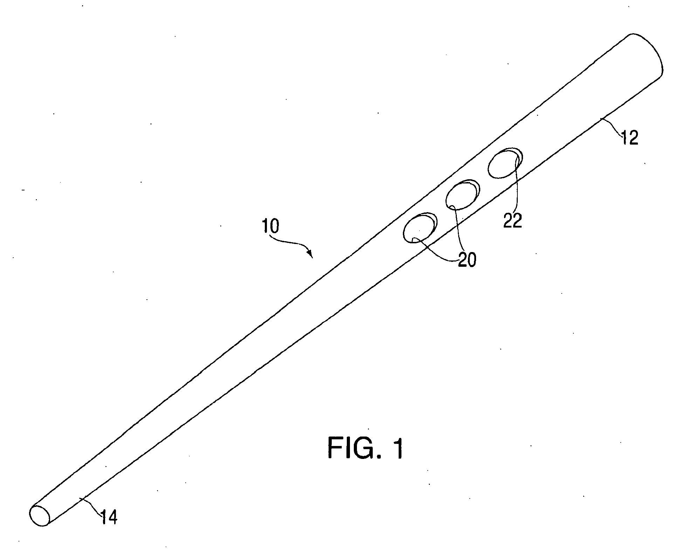

With greater reference to Figure 1 of the drawings, the present invention is a composite golf shaft 10. The shaft features geometric shapes in the shaft for improving the flexibility, strength and other playing characteristics of the shaft. The shaft comprises a handle end 12, about which a grip is normally attached, and a tip end 14, which is attached to a hosel of a golf club iron or wood in a known manner. The shaft 10 is preferably fabricated of multiple layers of aligned carbon filaments held together with an epoxy binder, i.e., so-called "graphite" material. The fibers in the various plies are parallel to one another, but the various plies preferably have varying fiber orientations.

The shaft 10 has a long, generally hollow configuration that preferably tapers from the handle end 12 to the tip end 14.

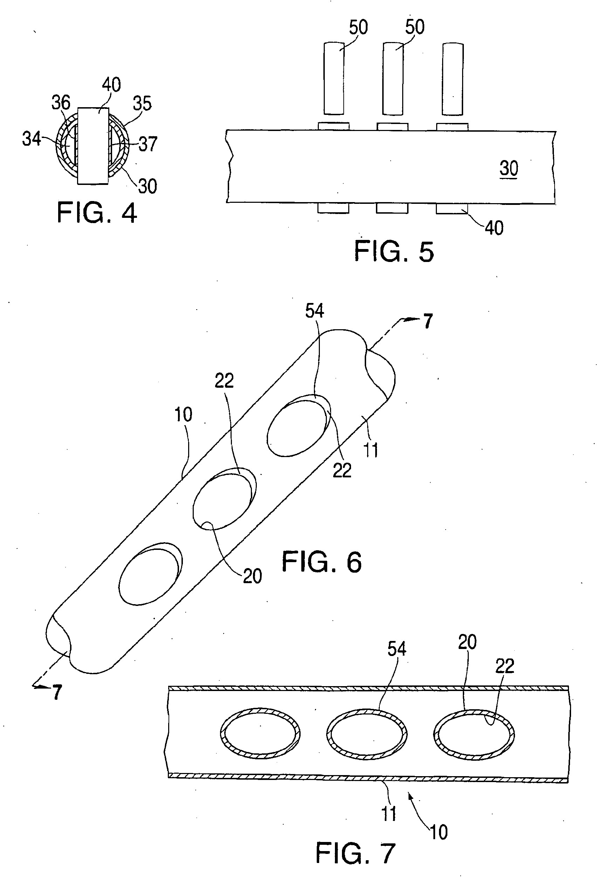

A plurality of "ports" 20 are formed in the shaft 10, preferably near the handle end 12. The ports extend between opposed walls of the shaft, as described further below. Each port is preferably oval in shape, with the long axis of the oval in line with the longitudinal axis of the shaft. Each port 20 includes a peripheral wall 22 (see also Figures 6-7) that extends between the front face and the rear face of the shaft. The opposite ends of the port 20 are bonded to the tubular shaft 10. As used herein, the "front" wall of the shaft refers to the surface facing in the direction in which the golf club is swung.

The ports are preferably in the shape of double opposing arches which allow the structure to deflect, which deforms the ports, and return with more resiliency. The ports also allow greater bending flexibility than would traditionally be achieved in a single tube design. The ports also provide improved strength because internal columns help prevent buckling failures of the thin walled tubular shaft. The structure can also improve comfort by absorbing shock and damping vibrations due to the deformation of the ports. Finally, the ports create a unique appearance to the golf shaft.

The golf shaft is preferably made from a long fiber reinforced prepreg type material. Traditional lightweight composite structures have been made by preparing an intermediate material known as a prepreg which will be used to mold the final structure.

A prepreg is formed by embedding the fibers, such as carbon, glass, and others, in resin. This is typically done using a prepreg machine, which applies the non-cured resin over the fibers so they are all wetted out. The resin is at an "B Stage" meaning that only heat and pressure are required to complete the cross linking and harden and cure the resin. Thermoset resins like epoxy are popular because they are available in liquid form at room temperature, which facilitates the embedding process.

A thermoset is created by a chemical reaction of two components, forming a material in a nonreversible process. Usually, the two components are available in liquid form, and after mixing together, will remain a liquid for a period of time before the cross-linking process begins. It is during this "B Stage" that the prepreg process happens, where the resin coats the fibers. Common thermoset materials are epoxy, polyester, vinyl, phenolic, polyimide, and others.

The prepreg sheets are cut and stacked according to a specific sequence, paying attention to the fiber orientation of each ply.

Each prepreg layer comprises an epoxy resin combined with unidirectional parallel fibers from the class of fibers including but not limited to carbon fibers, glass fibers, aramid fibers, and boron fibers.

The prepreg is cut into strips at various angles and laid up on a table. The strips are then stacked in an alternating fashion such that the fibers of each layer are different to the adjacent layers. For example, one layer may be +45 degrees, the next layer -45 degrees. If more bending stiffness is desired, a fiber angle such as zero degrees is used. If more torsional stiffness is desired, a higher proportion of +/- 45 degree strips are used. If more bending stiffness is desired, a higher proportion of 0 degree fibers are used. Other fiber angles may also be used.

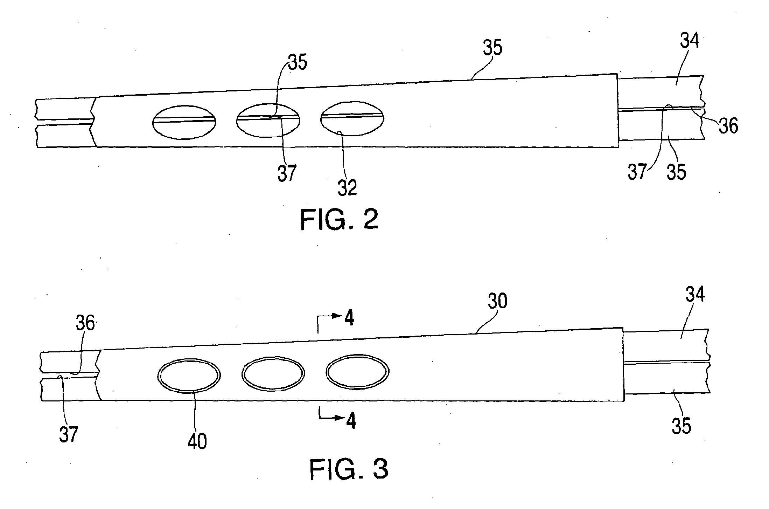

This layup, which comprises various strips of prepreg material, is then rolled up into a tube. Referring to Figure 2, according to the preferred embodiment of the invention, a suitable prepreg tube 30 is formed in the manner just described, with the various composite plies oriented at the desired angles. Next, a plurality of holes 32 are formed through opposing walls the tube, perpendicular to the axis of the tube. The holes 32 may be stamped through the walls. More preferably, a tool is used to separate the carbon fibers from one another, without cutting the fibers, to form the holes 32. The holes, at this stage, need not have the final desired shape.

Next, a pair of inflatable bladders 34, 35, preferably made of nylon, are inserted through the tube 30 such that their facing walls 36, 37 are aligned with the openings 32.

Referring to Figures 3-5, after the bladders 34, 35 have been inserted, a hollow, tubular plug 40 is inserted through each of the holes 32, between the facing walls 36, 37 of the bladders. Thus, as shown in Figure 4, the plugs 40 separate the two bladders.

The ends of the plugs 40 preferably extend beyond the outer surfaces of the prepreg tube 30, as shown in Figs. 4-5. The plugs are preferably tubes of prepreg material. However, if desired the plugs may be made of other materials such as metal or plastic.

Finally, as shown in Figure 5, if the plugs 40 are formed of prepreg material, a mold pin 50 is inserted through each plug 40 to form the internal geometry of the ports. This may occur prior to mold packing, or during the mold packing process.

The tube is then packed into a mold which forms the shape of the golf shaft. If the mold and tube are longer than the final desired dimension of the golf shaft, a final cut to length operation can be performed on the shaft 10 after molding.

Air fittings are applied to the interior of the bladder on each end of the tube 30. The mold is then closed over the tube 30 and placed in a heated platen press. For epoxy resins, the temperature is typically around 350 degrees F. While the mold is being heated, the tube 30 is internally pressurized, which compresses the prepreg material and forces the tube 30 to assume the shape of the mold. At the same time, the heat cures the epoxy resin. The bladders also compress the peripheral walls of the plugs 40, so that the inwardly facing surface of each plug 40 conforms to the shape of the mold pin 50 (which is preferably oval). At the same time, the heat and pressure cause the ends of the plug walls to bond to the wall of the prepreg tube 30.

Once cured, the mold is opened in the reverse sequence of packing. The pins 50 are typically removed first, followed by the top portion of the mold. Particular attention is needed if removing the top portion with the pins 50 intact to ensure that this is done in a linear fashion. Once the pins 50 have been removed from the shaft 10, the shaft can be removed from the bottom portion of the mold.

The above mentioned process describes using internal bladder pressurization for the entire length of the shaft. This tends to be slightly more cumbersome than the traditional method of producing a composite golf shaft, which is to roll the prepreg material over a metal mandrel followed by wrapping a external polymeric shrink wrap to consolidate the laminate upon the application of heat. It may be desirable to first mold a portion of the shaft using the traditional method, for example the lower portion of the shaft which includes the tip. This portion would then be placed in another mold where the bladder molded portion forming the ports would be fused to it.

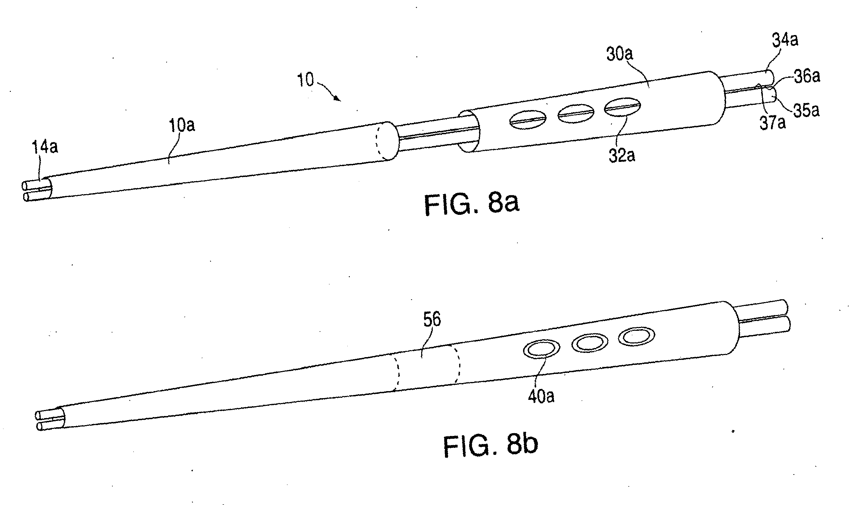

This alternative process is illustrated in Figures 8a - 8b. The shaft 10 is comprised of a lower portion 10a which is previously molded using the traditional method. A suitable prepreg tube 30a is formed in the manner as described in Figure 2, with the various composite plies oriented at the desired angles. Next, a plurality of holes 32a are formed through opposing walls the tube, perpendicular to the axis of the tube. The holes 32a may be stamped through the walls. More preferably, a tool is used to separate the carbon fibers from one another, without cutting the fibers, to form the holes 32a. The holes, at this stage, need not have the final desired shape.

Next, a pair of inflatable bladders 34a, 35a, preferably made of nylon, are inserted through the tube 30a such that their facing walls 36a, 37a are aligned with the openings 32a. The bladders continue through the premolded portion 10a and exit the tip area 14a.

After the bladders 34a, 35a have been inserted, a hollow, tubular plug 40a is inserted through each of the holes 32a, between the facing walls 36a, 37a of the bladders in a similar manner as described previously.

The ends of the plugs 40a preferably extend beyond the outer surfaces of the prepreg tube 30a. The plugs are preferably tubes of prepreg material. However, if desired the plugs may be made of other materials such as metal or plastic.

Finally, if the plugs 40a are formed of prepreg material, a mold pin is inserted through each plug to form the internal geometry of the ports. This may occur prior to mold packing, or during the mold packing process.

The lower portion 10a is connected to the prepreg portion 30a by means of an overlap joint 56. This is to ensure a strong interface between the two portions. Other joining means may be considered. The assembly is then packed into a mold which forms the shape of the upper portion of the golf shaft.

Air fittings are applied to the ends of the bladder. The mold is then closed over the tube 30a and a portion of the premolded lower portion 10a and placed in a heated platen press. While the mold is being heated, the tube 30a is internally pressurized, which compresses the prepreg material and forces the tube 30a to assume the shape of the mold as well as bond to the lower portion 10a. At the same time, the heat cures the epoxy resin. The bladders also compress the peripheral walls of the plugs 40a, so that the inwardly facing surface of each plug 40a conforms to the shape of the mold pins. At the same time, the heat and pressure cause the ends of the plug walls to bond to the wall of the prepreg tube 30a.

As shown in Figures 6-7, after molding, the shaft 10 is formed of a single, primary hollow tube 11, with a plurality of ports 20 extending through the tube 11. The ends of the port walls 54 are bonded to the portions of the tube 11 surrounding the ports 20, and the inwardly facing surfaces 22 of the ports 20 extend completely through the tube 11.

The composite material used is preferably carbon fiber reinforced epoxy because the objective is to provide reinforcement at the lightest possible weight. Other fibers may be used such as fiberglass, aramid, boron and others. Other thermoset resins may be used such as polyester and vinyl ester. Thermoplastic resins may also be used such as nylon, ABS, PBT and others.

The size and spacing of the ports can affect shaft stiffness in a desirable way. These ports can direct the flexpoint of the shaft toward the lower portion of the shaft if desired. A golf shaft with a lower flex point is said to provide more height to the shot.

An unexpected benefit of the ports in the shaft is that they actually improve the durability and strength of the shaft. This is because they act as arches to distribute the stress and strain in a very efficient manner. In addition, the cylindrical internal reinforcement resists compressive loads which tend to buckle the thin walls of the shaft tube.

Comfort is also enhanced because the deformation of the ports helps absorb shock and vibration loads from either hitting the golf ball off center, or by striking the club head on the hard ground which can send a shock wave directly up the axis of the golf club.

It is also possible to use a metal material for the main shaft tube such as aluminum or steel, and bond composite, metal or plastic cylindrical ports to the aluminum in a similar manner.

As to the manner of usage and operation of the present invention, the same should be apparent from the above description. Accordingly, no further discussion relating to the manner of usage and operation will be provided.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A golf club shaft (10) comprising:
a tubular shaft (10) having one end (12) adapted to be held by a player and an opposite end (14) to be attached to a golf club hosel;
the shaft (10) being fabricated of a relatively rigid material with limited flexibility;
wherein the shaft (10) is formed of a hollow tube (11) having at least one pair of aligned holes (32) extending through opposite wall portions of said tube (11); wherein a hollow port (20) extends through each pair of holes (32), said port (20) comprising opposite ends and a peripheral wall (22), and wherein said opposite ends are bonded to said hollow tube (11).

2. The shaft (10) as set forth in claim 1, wherein the tube (11) and each port (20) are made of a composite material.

3. The shaft (10) as set forth in claim 2, wherein said hollow tube (11) includes a plurality of pairs of aligned holes (32) and a corresponding number of ports (20).

4. The shaft (10) as set forth in claim 1, wherein said hollow tube (11) has a longitudinal axis, and wherein said at least one port (20) is at least generally oval in shape, to form a pair of arches, with the long dimension of the oval axially oriented.

5. The shaft (10) as set forth in claim 3, wherein said hollow tube (11) has a longitudinal axis, and wherein said ports are at least generally oval in shape, to form a pair of arches, with the long dimension of the oval axially oriented.

6. The shaft (10) set forth in claim 1, wherein the ports (20) are made of metal.

7. The shaft (10) set forth in claim 1, wherein the hollow tube (11) is made of metal and the port (20) is made of a composite material.

8. The shaft (10) set forth in claim 1, wherein the hollow tube (11) is made of a composite material and the port (20) is made of metal.

9. A method of forming a golf club shaft (10) comprising the steps of:
(a) forming a hollow prepreg tube (30; 30a) of uncured composite material;
(b) forming at least one pair of aligned holes (32; 32a) through opposed walls of said tube;
(c) inserting a pair of inflatable bladders (34, 35; 34a, 35a), each having opposite ends, through said prepreg tube (30; 30a), wherein said bladders (34, 35; 34a, 35a) are side-by-side, with adjoining walls aligned with said holes (32; 32a), and wherein the opposite ends of said bladders (34, 35; 34a, 35a) extend out of said prepreg tube (30; 30a);
(d) inserting a hollow tubular plug (40; 40a) through each pair of aligned holes (32; 32a), wherein each said plug (40; 40a) includes opposite ends and extends between said bladders (34, 35; 34a, 35a);
(e) placing said prepreg tube (30; 30a) into a closed mold having the shape of at least the handle; and
(f) heating said mold, while inflating said bladders (34, 35; 34a, 35a) so that said prepreg tube (30; 30a) assumes the shape of the mold and cures, and such that the opposite ends of said plug (40; 40a) bond to said prepreg tube during molding.

10. The method as recited in claim 9, wherein said at least one plug (40; 40a) is uncured composite material, comprising further the step, prior to step (1), of inserting a mold pin (50) through each said plug (40; 40a), so that each said plug (40; 40a) assumes the shape of said pin (50) during molding and curing.

11. The method of claim 10, wherein said aligned holes (32; 32a) are formed by separating fibers in said prepreg material.

12. The method of claim 10, further comprising the step of joining one end of said prepreg tube (30a) to one end of a second prepreg tube (10a) prior to molding, said tubes (30a 10a) forming said shaft (10).

## Patentansprüche

1. Golfschlägerschaft (10), aufweisend:
einen röhrenförmigen Schaft (10), dessen eines Ende (12) dafür ausgelegt ist, von einem Spieler gegriffen zu werden, und dessen entgegengesetztes Ende (14) dafür ausgelegt ist, an einem Golfschläger-Verbindungsstück befestigt zu werden;
wobei der Schaft (10) aus relativ starrem Material mit begrenzter Biegsamkeit hergestellt ist;
wobei der Schaft (10) aus einem hohlen Rohr (11) mit mindestens einem Paar aus auf einer Linie liegenden Löchern (32), die durch einander gegenüber liegende Wandabschnitte des Rohrs (11) hindurch verlaufen, gebildet ist; wobei ein hohler Kanal (20) durch jedes Paar aus Löchern (32) verläuft, wobei der Kanal (20) einander gegenüber liegende Enden und eine Umfangswand (22) aufweist, und
wobei die einander gegenüber liegenden Enden mit dem hohlen Rohr verbunden sind.

2. Schaft (10) nach Anspruch 1, wobei das Rohr (11) und jeder Kanal (20) aus einem Verbundmaterial bestehen.

3. Schaft (10) nach Anspruch 2, wobei das hohle Rohr (11) eine Vielzahl von Paaren aus auf einer Linie liegenden Löchern (32) und eine entsprechende Anzahl von Kanälen (20) aufweist.

4. Schaft (10) nach Anspruch 1, wobei das hohle Rohr (11) eine Längsachse aufweist und wobei der mindestens eine Kanal (20) zumindest allgemein von ovaler Form ist, um ein Paar Wölbungen zu bilden, wobei die Längendimension des Ovals axial ausgerichtet ist.

5. Schaft (10) nach Anspruch 3, wobei das hohle Rohr (11) eine Längsachse aufweist, und wobei die Kanäle zumindest allgemein von ovaler Form sind, um ein Paar Wölbungen zu bilden, wobei die Längendimension des Ovals axial ausgerichtet ist.

6. Schaft (10) nach Anspruch 1, wobei die Kanäle (20) aus Metall bestehen.

7. Schaft (10) nach Anspruch 1, wobei das hohle Rohr (11) aus Metall besteht und der Kanal (20) aus einem Verbundmaterial besteht.

8. Schaft (10) nach Anspruch 1, wobei das hohle Rohr (11) aus einem Verbundmaterial besteht und der Kanal (20) aus Metall besteht.

9. Verfahren zum Bilden eines Golfschlägerschafts (10), die folgenden Schritte umfassend:
(a) Bilden eines hohlen Prepreg-Rohrs (30; 30a) aus ungehärtetem Verbundmaterial;
(b) Bilden mindestens eines Paares aus auf einer Linie liegenden Löchern (32; 32a) durch einander gegenüber liegende Wände des Rohres hindurch;
(c) Einführen eines Paares aus entfaltbaren Bälgern (34, 35; 34a, 35a) jeweils mit einander gegenüber liegenden Enden durch das Prepreg-Rohr (30; 30a), wobei die Bälger (34, 35; 34a, 35a) nebeneinander liegen, wobei aneinander grenzende Wände an den Löchern (32; 32a) ausgerichtet werden, und wobei die einander gegenüber liegenden Enden der Bälger (34, 35; 34a, 35a) aus dem Prepreg-Rohr hinaus verlaufen;
(d) Einführen eines hohlen, röhrenförmigen Stopfens (40; 40a) durch jedes Paar aus auf einer Linie liegenden Löchern (32; 32a), wobei jeder der Stopfen (40, 40a) einander gegenüber liegende Enden aufweist und zwischen den Bälgern (34, 35; 34a, 35a) verläuft;
(e) Legen des Prepreg-Rohrs (30; 30a) in eine geschlossene Form, die mindestens wie der Griff gestaltet ist; und
(f) Erwärmen der Form, während die Bälger (34, 35, 34a, 35a) entfaltet werden, so dass das Prepreg-Rohr (30; 30a) die Gestalt der Form annimmt und härtet, und so, dass die einander gegenüber liegenden Enden des Stopfens (40; 40a) sich während des Formens mit dem Prepreg-Rohr verbinden.

10. Verfahren nach Anspruch 9, wobei der mindestens eine Stopfen (40; 40a) ein ungehärtetes Verbundmaterial ist, ferner vor dem Schritt (f) den Schritt des Einführens eines Formstifts (50) durch jeden der Stopfen (40; 40a) umfassend, so dass jeder Stopfen (40; 40a) während des Formens und Härtens die Gestalt des Stiftes (50) annimmt.

11. Verfahren nach Anspruch 10, wobei die auf einer Linie liegenden Löcher (32; 32a) durch Voneinandertrennen von Fasern in dem Prepreg-Material gebildet werden.

12. Verfahren nach Anspruch 10, ferner den Schritt des Fügens eines Endes des Prepreg-Rohrs (30a) an ein Ende eines zweiten Prepreg-Rohrs (10a) vor dem Formen der Rohre (30a, 40a), welche den Schaft (10) bilden, umfassend.

## Revendications

1. Tige (10) de bâton de golf comprenant :
une tige tubulaire (10) ayant une extrémité (12) adaptée pour être tenue par un joueur et une extrémité opposée (14) à fixer à un col de bâton de golf ;
la tige (10) étant faite d'un matériau relativement rigide de flexibilité limitée ;
dans lequel la tige (10) est formée d'un tube creux (11) comportant au moins une paire de trous alignés (32) s'étendant à travers des parties de paroi opposées dudit tube (11); dans lequel un passage creux (20) s'étend à travers chaque paire de trous (32), ledit passage (20) comprenant des extrémités opposées et une paroi périphérique (22) ; et dans lequel lesdites extrémités opposées sont reliées audit tube creux (11).

2. Tige (10) selon la revendication 1, dans lequel le tube (11) et chaque passage (20) sont en matériau composite.

3. Tige (10) selon la revendication 2, dans lequel ledit tube creux (11) comprend une pluralité de paires de trous alignés (32) et un nombre correspondant de passages (20).

4. Tige (10) selon la revendication 1, dans lequel ledit tube creux (11) a un axe longitudinal, et dans lequel ledit au moins un passage (20) est de forme au moins généralement ovale, pour former une paire d'arcs, la longueur de l'ovale étant orientée dans un sens axial.

5. Tige (10) selon la revendication 3, dans lequel ledit tube creux(11) a un axe longitudinal, et dans lequel lesdits passages sont de forme au moins généralement ovale, pour former une paire d'arcs, la longueur de l'ovale étant orientée dans un sens axial.

6. Tige (10) selon la revendication 1, dans lequel les passages (20) sont en métal.

7. Tige (10) selon la revendication 1, dans lequel le tube creux (11) est en métal et le passage (20) est en matériau composite.

8. Tige (10) selon la revendication 1, dans lequel le tube creux (11) est en matériau composite et le passage (20) est en métal.

9. Procédé de formation d'une tige (10) de bâton de golf, comprenant les étapes suivantes :
(a) formation d'un tube creux pré-imprégné (30; 30a) en matériau composite non durci ;
(b) formation d'au moins une paire de trous alignés (32; 32a) à travers des parois opposées dudit tube ;
(c) insertion d'une paire de vessies gonflables (34, 35 ; 34a, 35a) ayant chacune des extrémités opposées, à travers ledit tube pré-imprégné (30; 30a), dans lequel lesdites vessies (34, 35; 34a, 35a) sont côte à côte, les parois attenantes étant alignées avec lesdits trous (32 ; 32a) et dans lequel les extrémités opposées desdites vessies (34, 35; 34a, 35a) s'étendent hors dudit tube pré-imprégné (30 ; 30a) ;
(d) insertion d'un bouchon tubulaire creux (40; 40a) à travers chaque paire de trous alignés (32 ; 32a), dans lequel chaque dit bouchon (40 ; 40a) comprend des extrémités opposées et s'étend entre lesdites vessies (34, 35 ; 34a, 35a) ;
(e) placement dudit tube pré-imprégné (30 ; 30a) dans un moule fermé ayant la forme d'au moins la poignée ; et
(f) chauffage dudit moule, tout en gonflant lesdites vessies (34, 35 ; 34a, 35a), de sorte que ledit tube pré-imprégné (30; 30a) emprunte la forme du moule et durcisse, et de sorte que les extrémités opposées dudit bouchon (40 ; 40a) se lient audit tube pré-imprégné pendant le moulage.

10. Procédé selon la revendication 9, dans lequel ledit au moins un bouchon (40; 40a) est en matériau composite non durci, comprenant en outre l'étape, avant l'étape (f), d'insertion d'une broche (50) de moule à travers chaque dit bouchon (40 ; 40a) de sorte que chaque dit bouchon (40 ; 40a) emprunte la forme de ladite broche (50) pendant le moulage et le durcissement.

11. Procédé selon la revendication 10, dans lequel lesdits trous alignés (32 ; 32a) sont formés en séparant des fibres dans ledit matériau pré-imprégné.

12. Procédé selon la revendication 10, comprenant en outre l'étape de liaison d'une extrémité dudit tube pré-imprégné (30a) à une extrémité d'un second tube pré-imprégné (10a) avant le moulage, lesdits tubes (30a, 10a) formant ladite tige (10).
